# FASCICULE DE BREVET EUROPEEN

(11) **EP 3 943 814 B1**
(45) Date de publication et mention de la délivrance du brevet: **30.07.2025**
(21) Numéro de dépôt: 21186681.9
(22) Date de dépôt: 20.07.2021
(51) Int. Cl.: F23J 13/04, F16L 7/00

(54) **TRONÇON DE CONDUIT DE FUMÉE DU TYPE À DEUX TUBES CONCENTRIQUES ET SON PROCÉDÉ DE FABRICATION**
ABSCHNITT EINES RAUCHABZUGSROHRS VOM TYP MIT ZWEI KONZENTRISCHEN ROHREN UND SEIN HERSTELLUNGSVERFAHREN
SECTION OF SMOKE DUCT OF THE TYPE WITH TWO CONCENTRIC TUBES AND MANUFACTURING METHOD THEREOF

(30) Priorité: 20.07.2020 FR 2007586
(43) Date de publication de la demande: 26.01.2022
(73) Titulaire: Poujoulat, 79360 Granzay Gript (FR)
(72) Inventeur: BALOGE, Jean-Charles, 79370 AIGONNAY (FR)
(74) Mandataire: Jacobacci Coralis Harle

(56) Documents cités:
- DE-A1- 102017 207 053
- DE-A1- 19 817 343
- JP-A- 2008 082 362
- JP-A- 2018 173 187
- US-A- 177 729
- US-A- 3 872 780
- US-A- 4 781 402
- US-A1- 2002 092 518

## Description

### Domaine technique de l'invention

La présente invention concerne le domaine général de la fumisterie.

Elle concerne plus particulièrement un tronçon de conduit pour la réalisation d'un conduit destiné, d'une part, à l'évacuation des produits de combustion générés par un appareil de chauffage, et, d'autre part, à l'alimentation en air comburant de cet appareil de chauffage.

### Etat de la technique

Le fonctionnement optimal de certains appareils de chauffage, notamment les appareils étanches de type poêle ou chaudière, nécessite une alimentation en air, dit « air comburant ».

Pour réaliser cette alimentation en air comburant, une solution intéressante consiste à utiliser un conduit d'évacuation des produits de combustion constitué d'une juxtaposition de tronçons de conduits, emboités les uns à la suite des autres, et composés chacun de deux tubes concentriques :
(i) un tube intérieur, formant une chambre centrale assurant l'évacuation proprement dite des produits de combustion depuis l'appareil de chauffage, et
(ii) un tube extérieur, définissant avec le tube intérieur en regard, une chambre périphérique annulaire pour le cheminement de l'air comburant provenant de l'extérieur, vers cet appareil de chauffage.

De manière classique les tronçons de conduits de fumée concentriques, isolés ou non, sont assemblés mécaniquement, soit par soudage, ce qui ne permet pas leur démontage ultérieur, soit par vissage, leur démontage nécessitant alors un outil, et le rendu obtenu étant peu esthétique.

Les solutions actuelles ne sont donc pas optimales face aux exigences esthétiques grandissantes, et également du fait des contraintes techniques liées notamment aux procédés de mise en peinture du tube extérieur métallique, incompatibles avec des matériaux plastiques (type polypropylène par exemple) qui composent parfois le tube intérieur. Des tronçons de conduits de fuméede l'art antérieur sont connues par les documents US 4 781 402 A, DE 10 2017 207053 A1, et US 3 872 780 A.

Il existe donc un besoin de proposer d'autres solutions d'assemblage entre le tube intérieur et le tube extérieur constitutifs de tels tronçons de conduits de fumée.

### Présentation de l'invention

Afin de remédier au moins à certains inconvénients précités de l'état de la technique, la présente invention propose un tronçon de conduit de fumée destiné à la réalisation d'un conduit d'évacuation de fumée comprenant - une chambre centrale destinée à l'évacuation des produits de combustion générés par un appareil de chauffage, et - une chambre périphérique annulaire destinée à l'alimentation en air comburant de cet appareil de chauffage,
lequel tronçon de conduit de fumée est du type à deux tubes concentriques séparés par un espace annulaire et comprend - un tube extérieur délimité par une surface extérieure et une surface intérieure, et - un tube intérieur délimité par une surface extérieure et une surface intérieure,
lequel tronçon de conduit de fumée comprend des moyens de centrage pour centrer ledit tube intérieur dans ledit tube extérieur et rendre lesdits tubes intérieur et extérieur concentriques par rapport à un axe central,
et lequel tronçon de conduit de fumée comprend des moyens d'assemblage pour assembler ledit tube intérieur avec ledit tube extérieur,
ce tronçon de conduit de fumée étant caractérisé par le fait que lesdits moyens d'assemblage comprennent des structures de butées solidaires du tube extérieur, et des structures de blocage solidaires du tube intérieur, lesquelles structures de butées et lesquelles structures de blocage sont aptes à être mises en appui les unes contre les autres, par un mouvement de rotation desdits tubes concentriques l'un par rapport à l'autre, autour dudit axe central, de sorte à obtenir un verrouillage axial desdits tubes l'un par rapport à l'autre dans les deux directions axiales.

Les moyens d'assemblage entre les deux tubes sont ainsi masqués ce qui permet d'obtenir un excellent rendu esthétique.

Selon une autre caractéristique préférée, les structures de butées et les structures de blocage sont aptes à être décalées les unes par rapport aux autres de sorte à autoriser un mouvement axial des deux tubes l'un par rapport à l'autre dans les deux directions axiales, pour permettre un déverrouillage des deux tubes après leur assemblage.

L'invention propose ainsi une solution simple qui permet de monter et démonter aisément le tube intérieur du conduit concentrique sans outil.

D'autres caractéristiques non limitatives et avantageuses du tronçon de conduit de fumée conforme à l'invention, prises individuellement ou selon toutes les combinaisons techniquement possibles, sont les suivantes :
- Le tronçon de conduit de fumée comprend :
   (a) au moins une première structure de butée solidaire du tube extérieur adaptée pour coopérer avec au moins une première structure de blocage solidaire du tube intérieur, formant au moins un couple de première structure de butée et de première structure de blocage, lequel au moins un couple de première structure de butée et de première structure de blocage est agencé de sorte, lorsque ladite première structure de butée et ladite première structure de blocage coopèrent par appui, à obtenir un blocage axial des deux tubes l'un par rapport à l'autre, dans une première direction axiale, et
   (b) au moins une seconde structure de butée solidaire du tube extérieur adaptée pour coopérer avec au moins une seconde structure de blocage solidaire du tube intérieur, formant au moins un couple de seconde structure de butée et de seconde structure de blocage, lequel au moins un couple de seconde structure de butée et de seconde structure de blocage est agencé de sorte, lorsque ladite seconde structure de butée et ladite seconde structure de blocage coopèrent par appui, à obtenir un blocage axial des deux tubes l'un par rapport à l'autre dans la seconde direction axiale.
- Les moyens de centrage comprennent, au moins pour l'un d'entre eux, au moins deux portions de cylindre disposées dans un même plan et centrées sur ledit axe central, lesquelles portions de cylindre sont séparées par des ouvertures, et lesquelles portions de cylindre sont délimitées par deux bordures en arc de cercle, l'une orientée vers l'intérieur, dite bordure intérieure, et l'autre orientée vers l'extérieur, dite bordure extérieure, dont au moins l'une constitue l'une desdites structures de butée.
Dans ce cas, de préférence, les moyens de centrage sont solidaires du tube extérieur et comprennent une partie concave desdites portions de cylindre, destinée à coopérer avec la surface extérieure du tube intérieur, lesquelles portions de cylindre se prolongent par des pattes latérales de fixation, pour leur fixation sur la surface intérieure du tube extérieur.
- Les structures de blocage consistent chacune en une surface de blocage d'une patte de blocage solidaire de la surface extérieure du tube intérieur.
   Les pattes de blocage peuvent alors être portées par un collier de serrage qui ceinture le tube intérieur ; et la surface de blocage des pattes de blocage s'étend de préférence dans plan perpendiculaire audit axe central.
- Les dimensions des pattes de blocage sont adaptées pour autoriser leur passage au travers des ouvertures qui séparent les portions de cylindre des moyens de centrage.
- De préférence, le tronçon de conduit de fumée comprend des pattes de blocage dont certaines coopèrent avec la bordure extérieure desdits moyens de centrage et dont d'autres coopèrent avec la bordure intérieure desdits moyens de centrage.

Selon encore une autre particularité, au moins l'une desdites pattes de blocage dispose d'une élasticité dans la direction axiale, laquelle patte de blocage comprend un ergot de blocage adapté pour coopérer avec une bordure desdites pattes latérales de fixation, de sorte à venir se positionner entre les deux pattes latérales d'une portion de cylindre des moyens de centrage, par l'élasticité de ladite patte de blocage, lors dudit mouvement de rotation desdits tubes concentriques l'un par rapport à l'autre.

La présente invention concerne encore un procédé de fabrication d'un tronçon de conduit de fumée pour la réalisation d'un conduit d'évacuation de fumée, lequel tronçon de conduit de fumée comprend - un tube extérieur délimité par une surface extérieure et une surface intérieure, et - un tube intérieur délimité par une surface extérieure et une surface intérieure,
lequel tronçon de conduit de fumée comprend des moyens de centrage pour centrer ledit tube intérieur dans ledit tube extérieur et rendre lesdits tubes intérieur et extérieur concentriques par rapport à un axe central,
le procédé consistant :
   - à fournir un tube extérieur dont la surface intérieure comprend des structures de butées,
   - à fournir un tube intérieur dont la surface extérieure comprend des structures de blocage, et
   - à mettre en appui lesdites structures de butées contre lesdites structures de blocage, par un mouvement de rotation desdits tubes concentriques l'un par rapport à l'autre, autour dudit axe central, de sorte à obtenir un verrouillage axial desdits tubes l'un par rapport à l'autre dans les deux directions axiales.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### Description détaillée de l'invention

De plus, diverses autres caractéristiques de l'invention ressortent de la description annexée effectuée en référence aux dessins qui illustrent des formes, non limitatives, de réalisation de l'invention et où :
[Fig. 1] est une vue schématique de l'extrémité d'un tronçon de conduit de fumée conforme à l'invention ;
[Fig. 2] est une vue schématique en coupe longitudinale du tronçon de conduit de fumée, selon le plan de coupe 2-2 de la figure 1 ;
[Fig. 3] est une vue agrandie du détail A de la figure 2 ;
[Fig. 4] est une vue schématique en perspective du tronçon de conduit de fumée toujours selon le plan de coupe 2-2 de la figure 1 ;
[Fig. 5] est une vue agrandie du détail B de la figure 4 ;
[Fig. 6] est une vue schématique en perspective d'un collier de serrage muni de pattes de blocage, constitutif des moyens de blocage du tronçon de conduit de fumée des figures 1 à 5 ;
[Fig. 7] est une vue schématique en perspective illustrant une étape du montage du tube intérieur dans le tube extérieur, pour la fabrication du tronçon de conduit de fumée des figures 1 à 5 ;
[Fig. 8] est une vue schématique en perspective illustrant une étape ultérieure du montage du tube intérieur dans le tube extérieur, pour la fabrication du tronçon de conduit de fumée des figures 1 à 5 ;
[Fig. 9] est une vue schématique en perspective illustrant une étape du démontage des deux tubes intérieur et extérieur, après leur assemblage.

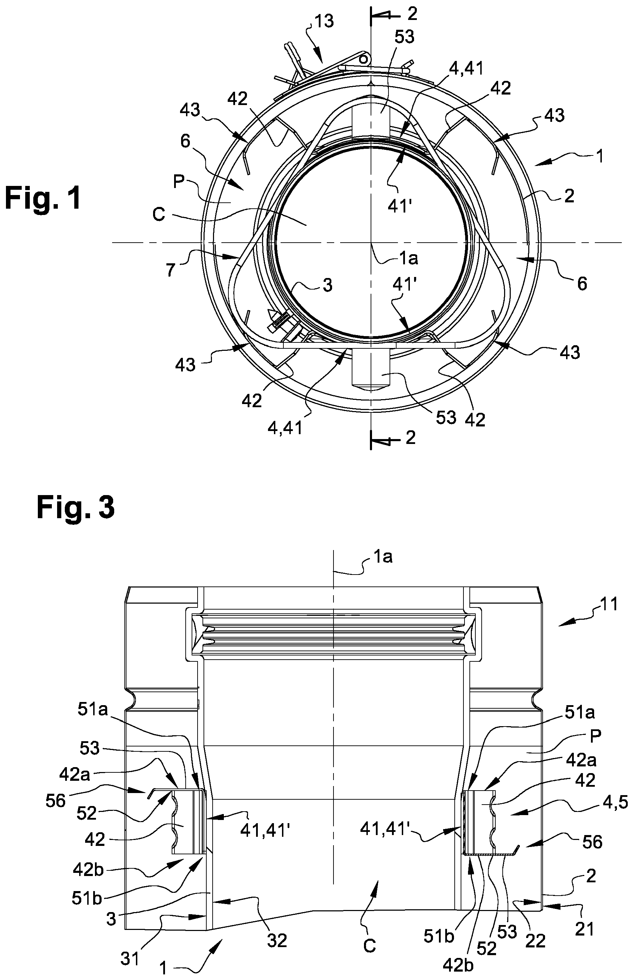

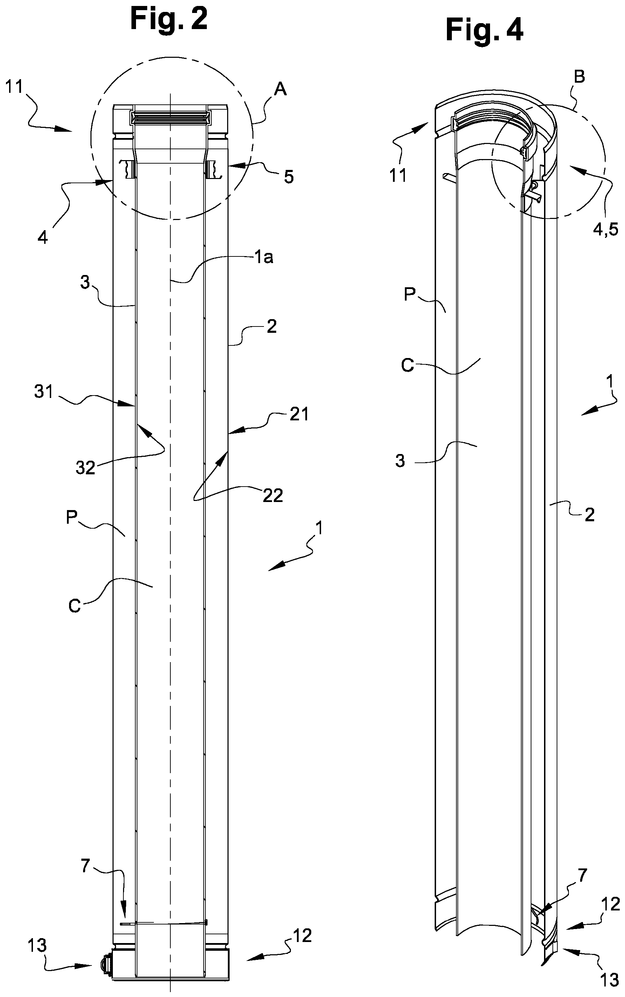

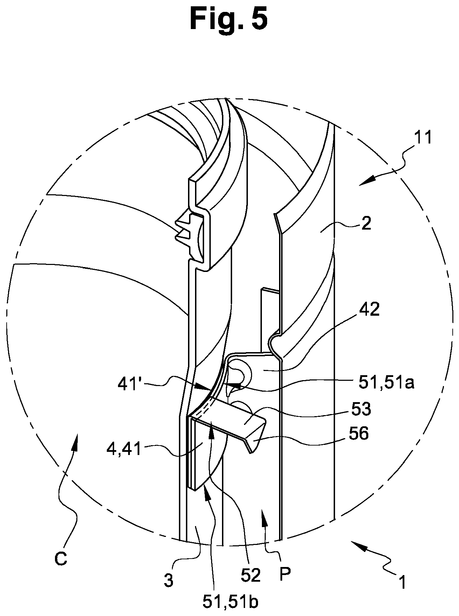

Les figures 1 à 5 illustrent une forme de réalisation possible d'un tronçon de conduit de fumée 1 selon l'invention, qui peut être assemblé par emboitement avec d'autres tronçons de conduits identiques ou similaires, pour former un conduit de fumisterie pour habitat.

Le conduit de fumée concentrique ainsi formé peut par exemple être destiné à s'étendre au sein d'une gaine technique entre un appareil de chauffage étanche de type poêle ou chaudière, et une sortie extérieure, par exemple constituée par un terminal de toiture.

Le tronçon de conduit de fumée 1 est du type comportant (i) une chambre centrale C, pour l'évacuation par la sortie extérieure des produits de combustion générés par l'appareil de chauffage, et (ii) une chambre périphérique P, entourant la chambre centrale C, pour l'alimentation en air comburant de l'appareil de chauffage depuis ladite sortie extérieure.

Pour cela, le tronçon de conduit de fumée 1 comprend deux tubes concentriques par rapport à un axe central 1a, à savoir : - un tube extérieur 2 délimité par une surface extérieure 21 et une surface intérieure 22, et - un tube intérieur 3 délimité par une surface extérieure 31 et une surface intérieure 32.

La surface intérieure 32 du tube intérieur 3 délimite la chambre centrale C destinée au passage des produits de combustion générés par l'appareil de chauffage. La surface intérieure 22 du tube extérieur 2 et la surface extérieure 31 du tube intérieur 3 délimitent ensemble la chambre annulaire périphérique P destinée au passage de l'air comburant de l'appareil de chauffage.

Le tube extérieur 2 peut être réalisé en métal, par exemple en acier inoxydable ; et le tube intérieur 3 peut être réalisé en métal ou en matériau plastique, par exemple en polypropylène.

Le tronçon de conduit de fumée 1 comprend des moyens de centrage 4 pour centrer le tube intérieur 3 dans le tube extérieur 2 afin de les rendre concentriques par rapport à l'axe central 1a, ainsi que des moyens d'assemblage 5 pour assembler le tube intérieur 3 avec le tube extérieur 2, détaillés ci-après.

Le tronçon de conduit de fumée 1 comprend encore deux extrémités 11 et 12, l'une de type mâle et l'autre de type femelle, pour permettre l'assemblage par emboitement avec un tronçon de conduit de fumée identique ou similaire, ou avec l'appareil de chauffage ou le matériel de sortie extérieure. L'une de ces deux extrémités (en l'occurrence l'extrémité repérée 12) comprend un collier de serrage 13 destiné à sécuriser l'emboitement.

Comme détaillé plus loin, les moyens d'assemblage 5 pour assembler le tube intérieur 3 avec le tube extérieur 2 comprennent des structures de butées 51 solidaires du tube extérieur 2, et des structures de blocage 52 solidaires du tube intérieur 3. Et ces structures de butées 51 et de blocage 52 sont agencées pour pouvoir être mises en appui les unes contre les autres, par un mouvement de rotation des deux tubes concentriques 2 et 3 l'un par rapport à l'autre, autour de l'axe central 1a, de sorte à obtenir un verrouillage axial desdits tubes 2, 3 l'un par rapport à l'autre, dans les deux directions axiales. En outre le mouvement de rotation correspondant est réversible de sorte à permettre un décalage des structures de butées 51 et des structures de blocage 52, après assemblage, pour démonter/désassembler les deux tubes 2 et 3.

Les moyens de centrage 4 et les moyens d'assemblage 5 sont ici ménagés à proximité de l'une des extrémités 11 du tronçon de conduit de fumée 1, dans la chambre annulaire périphérique P.

Les moyens de centrage 4 sont adaptés pour centrer le tube intérieur 3 dans le tube extérieur 2 afin de les rendre concentriques ; et ils comprennent également les structures de butées 51 des moyens d'assemblage 5.

Les moyens de centrage 4 sont ici solidaires du tube extérieur 2. Ils comprennent deux portions de cylindre 41 disposées dans un même plan et centrées sur l'axe central 1a, prolongées sur les côtés par des pattes latérales de fixation 42.

Les portions de cylindre 41 sont délimitées par deux bordures en arc de cercle 51 qui constituent les structures de butées 51 précitées des moyens d'assemblage 5.

L'une de ces bordures en arc de cercle 51a (dite bordure extérieure 51a) est orientée vers l'extérieur, c'est-à-dire du côté de l'extrémité 11 du tronçon de conduit de fumée 1 à proximité ; et l'autre de ces bordures en arc de cercle 51b (dite bordure intérieure 51b) est orientée vers l'intérieur, c'est-à-dire vers la partie centrale du tronçon de conduit de fumée 1.

Les deux bordures en arc de cercle 51a, 51b qui constituent les structures de butées 51 s'étendent dans un plan qui est perpendiculaire à l'axe central 1a.

Les parties concaves 41' des deux portions de cylindre 41 sont centrées sur l'axe central 1a et elles s'étendent sur un cylindre virtuel dont le diamètre correspond, au jeu près, au diamètre de la surface extérieure 31 du tube intérieur 3.

Les deux portions de cylindre 41 sont disposées diamétralement opposées par rapport à l'axe central 1a ; elles sont séparées par des ouvertures 6, également diamétralement opposées.

L'extrémité libre 43 des pattes de fixation 42 est solidarisée avec la surface intérieure 22 du tube extérieur 2 par soudage.

Les pattes de fixation 42 sont délimitées par des bordures libres 42a et 42b qui prolongent les bordures en arc de cercle 51a, 51b des portions de cylindre 41, et qui s'étendent également dans un plan perpendiculaire à l'axe central 1a.

Les structures de blocage 52 des moyens d'assemblage 5 consistent chacune en une surface de blocage 52 d'une patte de blocage 53 solidaire de la surface extérieure 31 du tube intérieur 3 par l'intermédiaire d'un collier de serrage 54.

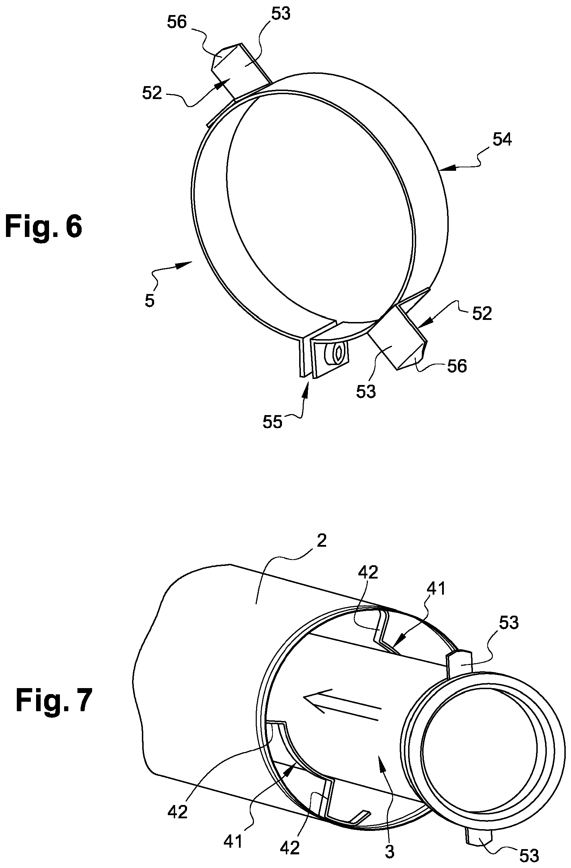

Le collier de serrage 54 avec ses deux pattes de blocage 53 est représenté isolément sur la figure 6. Il comprend un moyen de serrage 55 du type vis-écrou pour son serrage autour du tube intérieur 3. Les deux pattes de blocage 53 s'étendent vers l'extérieur du collier de serrage 54, de manière diamétralement opposée ; elles peuvent être réalisées monobloc avec le collier de serrage 54 ou être rapportées et solidarisées par exemple par soudage.

Une fois le collier de serrage 54 monté sur le pourtour du tube intérieur 3 et fixé par les moyens de serrage 55, chaque patte de blocage 53 s'étend dans plan perpendiculaire à l'axe central 1a. Et les deux pattes de blocage 53 s'étendent dans des plans différents, séparés d'une distance qui correspond à la distance entre les bordures en arc de cercle 51a, 51b des portions de cylindre 41.
Les deux pattes de blocage 53 s'étendent en porte à faux à partir du collier de serrage 54 qui les portent ; et ces pattes de blocage 53 disposent d'une élasticité dans la direction axiale.

De la sorte, on comprend que la surface de blocage 52 de l'une des pattes de blocage 53 est adaptée à coopérer avec l'une des bordures en arc de cercle 51a, 51b de l'une des portions de cylindre 41, et que la surface de blocage 52 de l'autre patte de blocage 53 est adaptée à coopérer avec l'autre des bordures en arc de cercle 51a, 51b de l'autre portion de cylindre 41.

Les dimensions des pattes de blocage 53 sont adaptées pour autoriser leur passage au travers des ouvertures 6 qui séparent les portions de cylindre 41 des moyens de centrage 4.

Sur les figures 3, 5 et 6 en particulier, on remarque la présence d'un ergot de blocage 56 qui s'étend à partir de l'extrémité des pattes de blocage 53, chacun en direction du plan dans lequel s'étend l'autre patte de blocage 53. Les ergots de blocage 56 peuvent s'étendre à 90° par rapport au plan des pattes de blocage 53, ou selon un angle un peu moins important.

Les côtés des ergots de blocage 56 sont prévus en biais, convergents l'un vers l'autre depuis l'extrémité de la patte de blocage 53 pour faciliter l'opération de blocage, comme expliqué plus loin dans la description.

Une fois le tube extérieur 2 muni des moyens de centrage 4, et le tube intérieur 3 muni du collier de serrage 54 équipé des pattes de blocage 53, le tube intérieur 3 est inséré dans le tube extérieur 2, par exemple par l'extrémité repérée 11, de la manière illustrée sur la figure 7.

Au cours de cette insertion, le tube intérieur 3 est guidé concentriquement au tube extérieur 2 par les deux parties concaves 41' des portions de cylindre 41 des moyens de centrage 4.

Avant que le collier de serrage 54 avec ses pattes de blocage 53 arrive au niveau des moyens de centrage 4, les pattes de blocage 53 sont positionnées dans l'axe des ouvertures 6 ; et lorsque le collier de serrage 54 avec ses pattes de blocage 53 arrive au niveau des moyens de centrage 4, l'une des pattes de blocage 53 passe par l'une des ouvertures 6 et vient se situer dans le plan de la bordure intérieure 51b des portions de cylindre 41 ; la seconde patte de blocage 53 vient de son côté se situer dans le plan de la bordure extérieure 51a des portions de cylindre 41.

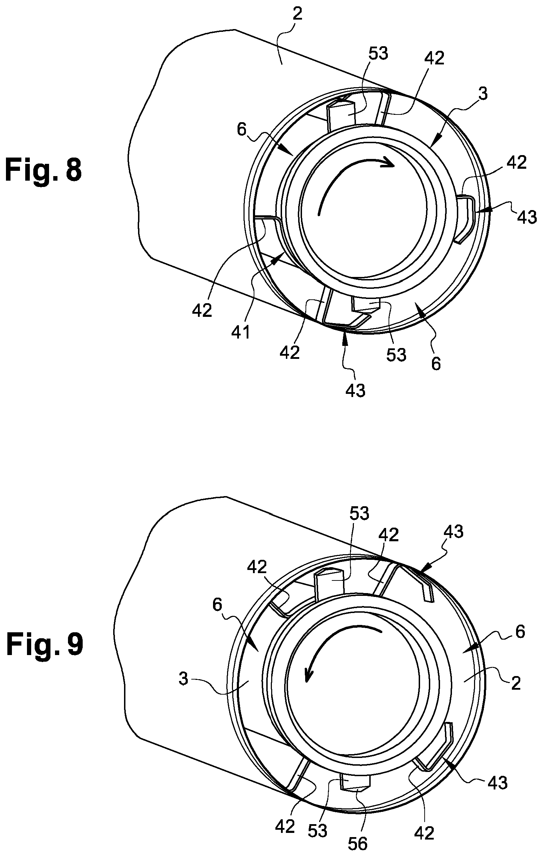

L'opérateur peut alors réaliser une rotation du tube intérieur 3 par rapport au tube extérieur 2 autour de l'axe central 1a, comme illustré sur la figure 8.

Les ergots de blocage 56 des pattes de blocage 53 arrivent alors en butée contre la bordure libre en regard 42a, 42b des pattes latérales de fixation 42 des portions de cylindre 41. Un effort de rotation permet aux ergots de blocage 56 de passer le niveau de cette bordure libre 42a, 42b des pattes latérales de fixation 42, grâce à l'élasticité axiale des pattes de blocage 53, ce passage étant encore facilité par la forme en biais des côtés des ergots de blocage 56.

Une prolongation du mouvement de rotation permet aux pattes de blocage 53 de venir se positionner en regard des portions de cylindre 41, de sorte que les structures de blocage 52 coopèrent avec les structures de butées 51a, 51b.

On comprend que l'une des structures de butée 51a coopère par appui avec une première structure de blocage 52, pour obtenir un blocage axial des tubes 2 et 3 l'un par rapport à l'autre, dans une première direction axiale, et que l'autre structure de butée 51b coopère avec la seconde structure de blocage 52 pour obtenir un blocage axial desdits tubes 2, 3 l'un par rapport à l'autre dans la seconde direction axiale.

Les deux tubes 2 et 3 sont ainsi assemblés et verrouillés. Les ergots de blocage 56 situés entre les pattes latérales de fixation 42 des portions de cylindre 41 empêchent un désassemblage involontaire des deux tubes 2, 3.

Pour assurer une concentricité optimale des deux tubes 2 et 3, après assemblage, un moyen de centrage 7 complémentaire, amovible, peut être positionné au niveau de l'autre extrémité 12 du tronçon de conduit de fumée 1.

Comme on peut le voir sur la figure 1, ce moyen de centrage 7 complémentaire peut être constitué par un fil métallique conformé en triangle de telle sorte qu'il permette de réaliser trois « branches » venant se serrer sur le tube intérieur 3, et dont les angles peuvent sensiblement prendre contact avec la paroi intérieure 22 du tube extérieur 2, tout en laissant un jeu permettant l'assemblage par emboitement des tronçons de conduit entre eux.

Le démontage des deux tubes 2 et 3 s'effectue par un mouvement de rotation inverse, comme illustré sur la figure 9, après enlèvement du moyen de centrage 7 complémentaire. Les ergots de blocage 56 sont désactivés en appliquant un effort de rotation supplémentaire au niveau de leur passage sur les bordures libres 42a, 42b, en regard, des pattes latérales de fixation 42.

A titre de variantes de réalisation :
- le tronçon de conduit de fumée 1 peut comprendre un dispositif de centrage/assemblage 4, 5 tel que décrit ci-dessus, au niveau de chacune de ses extrémités.
- le tronçon de conduit de fumée 1 peut comprendre un moyen de centrage et un collier de serrage équipé d'une patte de blocage 53 unique (ou de plusieurs pattes de blocage situées dans le même plan), au niveau de chacune de ses extrémités. Dans ce cas, les pattes de blocage 53 coopèrent soit avec les bordures intérieure 51b des portions de cylindre 41, soit avec leurs bordures extérieures 51a.
- seule l'une des pattes de blocage 53 peut être équipée d'un ergot de blocage 56.
- les moyens de centrage 4 peuvent être solidaires du tube intérieur 3 et les pattes de blocage 53 solidaires du tube extérieur 2.
- les moyens de centrage 4 peuvent être constitués chacun de plus de deux portions de cylindre 41 avec pattes latérales de fixation 42.

La présente invention propose une solution avec un bon rendu esthétique et permet de monter et de démonter les deux tubes du tronçon de conduit concentrique sans outil.

L'assemblage permet de maintenir la concentricité des tubes et assure un point fixe permettant de maitriser les mouvements longitudinaux, notamment en cas de dilatation différentes des 2 tubes (métallique et plastique).

La présente invention permet également d'effectuer les traitements de surface du tube extérieur métallique, type peinture liquide, peinture poudre ou cuivrage par exemple, ces traitements étant incompatibles avec les matériaux plastiques (type polypropylène) qui composent parfois le tube intérieur.

Il est à noter que, sur ces figures, les éléments structurels et/ou fonctionnels communs aux différentes variantes peuvent présenter les mêmes références.

## Revendications

1. Tronçon de conduit de fumée (1) destiné à la réalisation d'un conduit d'évacuation de fumée comprenant - une chambre centrale (C) destinée à l'évacuation des produits de combustion générés par un appareil de chauffage, et - une chambre périphérique (P) annulaire destinée à l'alimentation en air comburant de cet appareil de chauffage,
lequel tronçon de conduit de fumée (1) est du type à deux tubes concentriques séparés par un espace annulaire et comprend - un tube extérieur (2) délimité par une surface extérieure (21) et une surface intérieure (22), et - un tube intérieur (3) délimité par une surface extérieure (31) et une surface intérieure (32),
lequel tronçon de conduit de fumée (1) comprend des moyens de centrage (4) pour centrer ledit tube intérieur (3) dans ledit tube extérieur (2) et rendre lesdits tubes intérieur (3) et extérieur (2) concentriques par rapport à un axe central (1a),
et lequel tronçon de conduit de fumée (1) comprend des moyens d'assemblage (5) pour assembler ledit tube intérieur (3) avec ledit tube extérieur (2), lesdits moyens d'assemblage (5) comprenant des structures de butées (51) solidaires dudit tube extérieur (2), et des structures de blocage (52) solidaires dudit tube intérieur (3),
**caractérisé en ce que**
lesdites structures de butées (51) et lesdites structures de blocage (52) sont aptes à être mises en appui les unes contre les autres, par un mouvement de rotation desdits tubes concentriques (2, 3) l'un par rapport à l'autre, autour dudit axe central (1a), de sorte à obtenir un verrouillage axial desdits tubes (2, 3) l'un par rapport à l'autre dans les deux directions axiales.

2. Tronçon de conduit de fumée (1) selon la revendication 1, **caractérisé en ce que** lesdites structures de butées (51) et lesdites structures de blocage (52) sont aptes à être décalées les unes par rapport aux autres de sorte à autoriser un mouvement axial desdits tubes (2, 3) l'un par rapport à l'autre dans les deux directions axiales.

3. Tronçon de conduit de fumée (1) selon l'une quelconque des revendications 1 ou 2, **caractérisé en ce qu'**il comprend :
- au moins une première structure de butée (51a) solidaire dudit tube extérieur (2) adaptée pour coopérer avec au moins une première structure de blocage (52) solidaire dudit tube intérieur (3), formant au moins un couple (51a, 52) de première structure de butée et de première structure de blocage, lequel au moins un couple (51a, 52) de première structure de butée et de première structure de blocage est agencé de sorte, lorsque ladite première structure de butée (51a) et ladite première structure de blocage (52) coopèrent par appui, à obtenir un blocage axial desdits tubes (2, 3) l'un par rapport à l'autre, dans une première direction axiale, et
- au moins une seconde structure de butée (51b) solidaire dudit tube extérieur (2) adaptée pour coopérer avec au moins une seconde structure de blocage (52) solidaire dudit tube intérieur (3), formant au moins un couple (51b, 52) de seconde structure de butée et de seconde structure de blocage, lequel au moins un couple (51b, 52) de seconde structure de butée et de seconde structure de blocage est agencé de sorte, lorsque ladite seconde structure de butée (51b) et ladite seconde structure de blocage (52) coopèrent par appui, à obtenir un blocage axial desdits tubes (2, 3) l'un par rapport à l'autre dans la seconde direction axiale.

4. Tronçon de conduit de fumée (1) selon l'une quelconque des revendications 1 à 3, **caractérisé en ce que** lesdits moyens de centrage (4) comprennent, au moins pour l'un d'entre eux, au moins deux portions de cylindre (41) disposées dans un même plan et centrées sur ledit axe central (1a), lesquelles portions de cylindre (41) sont séparées par des ouvertures (6), et lesquelles portions de cylindre (41) sont délimitées par deux bordures en arc de cercle (51a, 51b), l'une (51a) orientée vers l'extérieur, dite bordure extérieure (51a), et l'autre (51b) orientée vers l'intérieur, dite bordure intérieure (51b), dont au moins l'une constitue l'une desdites structures de butée (51).

5. Tronçon de conduit de fumée (1) selon la revendication 4, **caractérisé en ce que** lesdits moyens de centrage (4) sont solidaires du tube extérieur (2) et comprennent une partie concave (41') desdites portions de cylindre (41), destinée à coopérer avec la surface extérieure (31) du tube intérieur (3), lesquelles portions de cylindre (41) se prolongent par des pattes latérales de fixation (42), pour leur fixation sur la surface intérieure (22) du tube extérieur (2).

6. Tronçon de conduit de fumée (1) selon l'une quelconque des revendications 4 ou 5, **caractérisé en ce que** lesdites structures de blocage (52) consistent chacune en une surface de blocage (52) d'une patte de blocage (53) solidaire de la surface extérieure (31) du tube intérieur (3).

7. Tronçon de conduit de fumée (1) selon la revendication 6, **caractérisé en ce que** lesdites pattes de blocage (53) sont portées par un collier de serrage (54) qui ceinture le tube intérieur (3).

8. Tronçon de conduit de fumée (1) selon l'une quelconque des revendications 6 ou 7, **caractérisé en ce que** ladite surface de blocage (52) des pattes de blocage (53) s'étend dans plan perpendiculaire audit axe central (1a).

9. Tronçon de conduit de fumée (1) selon l'une quelconque des revendications 6 à 8, **caractérisé en ce que** les dimensions desdites pattes de blocage (53) sont adaptées pour autoriser leur passage au travers desdites ouvertures (6) qui séparent les portions de cylindre (41) des moyens de centrage (4).

10. Tronçon de conduit de fumée (1) selon l'une quelconque des revendications 6 à 9, **caractérisé en ce qu'**il comprend des pattes de blocage (53) dont certaines coopèrent avec la bordure extérieure (51a) desdits moyens de centrage (4) et dont d'autres coopèrent avec la bordure intérieure (51b) desdits moyens de centrage (4).

11. Tronçon de conduit de fumée (1) selon l'une quelconque des revendications 6 à 10, prise sous la dépendance de la revendication 5, **caractérisé en ce que** au moins l'une desdites pattes de blocage (53) dispose d'une élasticité dans la direction axiale, laquelle patte de blocage (53) comprend un ergot de blocage (56) adapté pour coopérer avec une bordure (42a, 42b) desdites pattes latérales de fixation (42), de sorte à venir se positionner entre les deux pattes latérales (42) d'une portion de cylindre (41) des moyens de centrage (4), par l'élasticité de ladite patte de blocage (53), lors dudit mouvement de rotation desdits tubes concentriques (2, 3) l'un par rapport à l'autre.

12. Procédé de fabrication d'un tronçon de conduit de fumée (1) pour la réalisation d'un conduit d'évacuation de fumée, lequel tronçon de conduit de fumée (1) comprend - un tube extérieur (2) délimité par une surface extérieure (21) et une surface intérieure (22), et - un tube intérieur (3) délimité par une surface extérieure (31) et une surface intérieure (32),
lequel tronçon de conduit de fumée (1) comprend des moyens de centrage (4) pour centrer ledit tube intérieur (3) dans ledit tube extérieur (2) et rendre lesdits tubes intérieur (3) et extérieur (2) concentriques par rapport à un axe central (1a), puis
- à fournir un tube extérieur (2) dont la surface intérieure (22) comprend des structures de butées (51),
- à fournir un tube intérieur (3) dont la surface extérieure (31) comprend des structures de blocage (52),
caractérisé en l'étape de mettre en appui lesdites structures de butées (51) contre lesdites structures de blocage (52), par un mouvement de rotation desdits tubes concentriques (2, 3) l'un par rapport à l'autre, autour dudit axe central (1a), de sorte à obtenir un verrouillage axial desdits tubes (2, 3) l'un par rapport à l'autre dans les deux directions axiales.

## Patentansprüche

1. Rauchabzugsrohrabschnitt (1), der für den Aufbau eines Rauchabzugsrohrs bestimmt ist, mit - einer zentralen Kammer (C), die zur Ableitung von durch ein Heizgerät erzeugte Verbrennungsprodukte bestimmt ist, und - einer ringförmigen umlaufenden Kammer (P), die zur Zufuhr von Verbrennungsluft zu diesem Heizgerät bestimmt ist,
wobei der Rauchabzugsrohrabschnitt (1) vom Typ zweier konzentrischer, durch einen ringförmigen Raum getrennter Rohre ist und - ein durch eine äußere Oberfläche (21) und eine innere Oberfläche (22) begrenztes äußeres Rohr (2) und - ein durch eine äußere Oberfläche (31) und eine innere Oberfläche (32) begrenztes inneres Rohr (3) aufweist,
wobei der Rauchabzugsrohrabschnitt (1) Zentrierungsmittel (4) zum Zentrieren des inneren Rohrs (3) im äußeren Rohr (2) und für eine konzentrische Anordnung des inneren und des äußeren Rohrs (3, 2) in Bezug auf eine zentrale Achse (1a) aufweist, und wobei der Rauchabzugsrohrabschnitt (1) Montagemittel (5) zum Zusammenbauen des inneren Rohrs (3) mit dem äußeren Rohr (2) aufweist,
wobei die Montagemittel (5) mit dem äußeren Rohr (2) fest verbundene Anschlagstrukturen (51) und mit dem inneren Rohr (3) fest verbundene Blockierungsstrukturen (52) aufweist,
**dadurch gekennzeichnet, daß** die Anschlagstrukturen (51) und die Blockierungsstrukturen (52) geeignet sind, durch eine relative Drehbewegung der konzentrischen Rohre (2, 3) zueinander um die zentrale Achse (1a) aneinander angedrückt zu werden, um eine axiale Verriegelung der besagten Rohre (2, 3) in beiden axialen Richtungen zueinander zu erhalten.

2. Rauchabzugsrohrabschnitt (1) gemäß Anspruch 1, **dadurch gekennzeichnet, daß** die Anschlagstrukturen (51) und die Blockierungsstrukturen (52) geeignet sind, gegeneinander verschoben zu werden, um eine axiale Bewegung der Rohre (2, 3) zueinander in beiden axialen Richtungen zu ermöglichen.

3. Rauchabzugsrohrabschnitt (1) gemäß einem der Ansprüche 1 oder 2, **dadurch gekennzeichnet, daß** er:
- mindestens eine mit dem äußeren Rohr (2) fest verbundene erste Anschlagstruktur (51a), die dazu ausgelegt ist, mit mindestens einer mit dem inneren Rohr (3) fest verbundenen ersten Blockierungsstruktur (52) zusammenzuwirken und mindestens ein Paar (51a, 52) aus einer ersten Anschlagstruktur und einer ersten Blockierungsstruktur zu bilden, wobei das mindestens eine Paar (51a, 52) aus einer ersten Anschlagstruktur und einer ersten Blockierungsstruktur so ausgelegt ist, daß es, wenn die erste Anschlagstruktur (51a) und die erste Blockierungsstruktur (52a) durch Druck zusammenwirken, eine axiale Blockierung der Rohre (2, 3) gegeneinander in einer ersten axialen Richtung erreicht, und
- mindestens eine mit dem äußeren Rohr (2) fest verbundene zweite Anschlagstruktur (51b), die dazu ausgelegt ist, mit mindestens einer mit dem inneren Rohr (3) fest verbundenen zweiten Blockierungsstruktur (52) zusammenzuwirken und mindestens ein Paar (51b, 52b) aus einer zweiten Anschlagstruktur und einer zweiten Blockierungsstruktur zu bilden, wobei das mindestens ein Paar (51b, 52b) aus einer zweiten Anschlagstruktur und einer zweiten Blockierungsstruktur so ausgelegt ist, daß es, wenn die zweite Anschlagstruktur (51b) und die zweite Blockierungsstruktur (52b) durch Druck zusammenwirken, eine axiale Blockierung der Rohre (2, 3) gegeneinander in der zweiten axialen Richtung erreicht,
aufweist.

4. Rauchabzugsrohrabschnitt (1) gemäß einem der Ansprüche 1 bis 3, **dadurch gekennzeichnet, daß** die Zentrierungsmittel (4) für mindestens eins von denen mindestens zwei Zylinderteile (41) aufweist, die in ein und derselben Ebene angeordnet sind und zur zentralen Achse (1a) zentrisch sind, wobei die Zylinderteile (41) durch Öffnungen (6) getrennt sind und die Zylinderteile (41) durch zwei kreisbogenförmige Ränder (51a, 51b) begrenzt sind, wobei einer (51a) nach außen gerichtet ist, der sogenannte äußere Rand (51a), und der andere (51b) nach innen gerichtet ist, der sogenannte innere Rand (51b), von denen mindestens einer eine der Anschlagstrukturen (51) bildet.

5. Rauchabzugsrohrabschnitt (1) gemäß Anspruch 4, **dadurch gekennzeichnet, daß** die Zentrierungsmittel (4) mit dem äußeren Rohr (2) fest verbunden sind und einen konkaven Teil (41') der Zylinderteile (41) aufweisen, der dazu bestimmt ist, mit der äußeren Oberfläche (31) des inneren Rohrs (3) zusammenzuwirken, wobei die Zylinderteile (41) für deren Befestigung an der inneren Oberfläche (22) des äußeren Rohrs (2) durch seitliche Befestigungslaschen (42) verlängert sind.

6. Rauchabzugsrohrabschnitt (1) gemäß einem der Ansprüche 4 oder 5, **dadurch gekennzeichnet, daß** die Blockierungsstrukturen (52) jeweils aus einer mit der äußeren Oberfläche (31) des inneren Rohrs (3) fest verbundenen Blockierungsoberfläche (52) einer Blockierungslasche (53) bestehen.

7. Rauchabzugsrohrabschnitt (1) gemäß Anspruch 6, **dadurch gekennzeichnet, daß** die Blockierungslaschen (53) durch einen Klemmring (54), der das innere Rohr (3) umgibt, getragen werden.

8. Rauchabzugsrohrabschnitt (1) gemäß einem der Ansprüche 6 oder 7, **dadurch gekennzeichnet, daß** sich die Blockierungsoberfläche (52) der Blockierungslaschen (53) in einer zur zentralen Achse (1a) senkrechten Ebene erstreckt.

9. Rauchabzugsrohrabschnitt (1) gemäß einem der Ansprüche 6 bis 8, **dadurch gekennzeichnet, daß** die Abmessungen der Blockierungslaschen (53) so bemessen sind, daß deren Passage durch die Öffnungen (6), die die Zylinderteile (41) der Zentrierungsmittel (4) trennen, möglich ist.

10. Rauchabzugsrohrabschnitt (1) gemäß einem der Ansprüche 6 bis 9, **dadurch gekennzeichnet, daß** er Blockierungslaschen (53) aufweist, von denen einige mit dem äußeren Rand (51a) der Zentrierungsmittel (4) zusammenwirken und von denen andere mit dem inneren Rand (51b) der Zentrierungsmittel (4) zusammenwirken.

11. Rauchabzugsrohrabschnitt (1) gemäß einem der Ansprüche 6 bis 10 in Abhängigkeit von Anspruch 5, **dadurch gekennzeichnet, daß** mindestens eine der Blockierungslaschen (53) eine Elastizität in axialer Richtung aufweist, wobei die Blockierungslasche (53) eine Blockierungsnase (56) aufweist, die dazu ausgelegt ist, mit einem Rand (42a, 42b) der seitlichen Befestigungslaschen (42) zusammenzuwirken, um sich durch die Elastizität der Blockierungslasche (53) bei der Drehbewegung der konzentrischen Rohre (2, 3) gegeneinander zwischen den beiden seitlichen Laschen (42) eines Zylinderteils (41) der Zentrierungsmittel (4) zu positionieren.

12. Verfahren zum Herstellen eines Rauchabzugsrohrabschnitts (1) für die Anfertigung eines Rauchabzugsrohrs, wobei der Rauchrohrabschnitt (1) - ein durch eine äußere Oberfläche (21) und eine innere Oberfläche (2) begrenztes äußeres Rohr (2) und - ein durch eine äußere Oberfläche (31) und eine innere Oberfläche (32) begrenztes inneres Rohr (3) aufweist,
wobei der Rauchabzugsabschnitt (1) Zentrierungsmittel (4) zum Zentrieren des inneren Rohrs (3) im äußeren Rohr (2) und zum konzentrischen Anordnen des inneren und des äußeren Rohrs (3, 2) in Bezug auf eine zentrale Achse (1a) aufweist, dann
- ein äußeres Rohr (2) bereitzustellen, dessen innere Oberfläche (22) Anschlagstrukturen (51) aufweist,
- ein inneres Rohr (3) bereitzustellen, dessen äußere Oberfläche (31) Blockierungsstrukturen (52) aufweist,
**gekennzeichnet durch** den Schritt des in Andruck Bringens der Anschlagstrukturen (51) gegen die Blockierungsstrukturen (52) durch eine Drehbewegung der konzentrischen Rohre (2, 3) gegeneinander um die zentrale Achse (1a), um eine axiale Verriegelung der Rohre (2, 3) gegeneinander in beiden axialen Richtungen zu erhalten.

## Claims

1. Section of smoke duct (1) for assembling a smoke exhaust duct comprising - a central chamber (C) intended for exhausting combustion products produced by a heating appliance, and - an annular peripheral chamber (P) intended for providing combustion air to that heating appliance,
said section of smoke duct (1) being of the type of two concentric tubes separated by an annular space and comprising - an outer tube (2) delimited by an outer surface (21) and an inner surface (22), and - an inner tube (3) delimited by an outer surface (31) and an inner surface (32),
said section of smoke duct (1) comprising centering means (4) for centering said inner tube (3) inside said outer tube (2) and making said inner tube (3) and outer tube (2) concentric with respect to a central axis (1a),
and said section of smoke duct (1) comprising assembling means (5) for assembling said inner tube (3) with said outer tube (2),
said assembling means (5) comprising stopping structures (51) fixed to the outer tube (2) and blocking structures (52) fixed to the inner tube (3),
**characterized in that**
said stopping structures (51) and said blocking structures (52) are able to be pressed against each other by a rotating movement of the concentric tubes (2, 3) relative to each other around said central axis (1a), in order to obtain an axial locking of the tubes (2, 3) relative to each other in the two axial directions.

2. Section of smoke duct (1) according to claim 1, **characterized in that** said stopping structures (51) and said blocking structures (52) are able to be offset relative to each other so as to allow an axial movement of said tubes (2, 3) relative to each other in the two axial directions.

3. Section of smoke duct (1) according to anyone of claims 1 or 2, **characterized in that** it comprises:
- at least one first stopping structure (51a) fixed to the outer tube (2) and able to cooperate with at least one first blocking structure (52) fixed to the inner tube (3), forming at least one pair (51a, 52) of first stopping structure and first blocking structure, said at least one pair (51a, 52) of first stopping structure and first blocking structure being arranged so that, when said first stopping structure (51a) and said first blocking structure (52) cooperate by being pressed against each other, an axial blocking of said tubes (2, 3) relative to each other in a first axial direction is obtained, and
- at least one second stopping structure (51b) fixed to the outer tube (2) and able to cooperate with at least one second blocking structure (52) fixed to the inner tube (3), forming at least one pair (51b, 52) of second stopping structure and second blocking structure, said at least one pair (51b, 52) of second stopping structure and second blocking structure being arranged so that, when said second stopping structure (51b) and said second blocking structure (52) cooperate by being pressed against each other, an axial blocking of said tubes (2, 3) relative to each other in the second axial direction is obtained.

4. Section of smoke duct (1) according to anyone of claims 1 to 3, **characterized in that** said centering means (4) comprise, at least for one of them, at least two cylinder portions (41) situated in a same plane and centered with respect to the central axis (1a), said cylinder portions (41) being separated by openings (6), and said cylinder portions (41) being delimited by two edges (51a, 51b) arranged in an arc of a circle, one (51a) being oriented to the outside, the so-called outer edge (5a), and the other one being oriented to the inside, the so-called inner edge (51b), at least one of them forming one of said stopping structures (51).

5. Section of smoke duct (1) according to claim 4, **characterized in that** said centering means (4) are fixed to the outer tube (2) and comprise a concave part (41') of said cylinder portions (41) that is intended to cooperate with the outer surface (31) of the inner tube (3), said cylinder portions (41) being extended by lateral fixing brackets (42) for fixing them on the inner surface (22) of the outer tube (2).

6. Section of smoke duct (1) according to anyone of claims 4 or 5, **characterized in that** each one of said blocking structures (52) consists of a blocking surface (52) of a blocking bracket (53) fixed to the outer surface (31) of the inner tube (3).

7. Section of smoke duct (1) according to claim 6, **characterized in that** said blocking brackets (53) are fixed to a clamping ring (54) which surrounds the inner tube (3).

8. Section of smoke duct (1) according to anyone of claims 6 or 7, **characterized in that** said blocking surface (52) of the blocking brackets (53) extends in a plane perpendicular to the central axis (1a).

9. Section of smoke duct (1) according to anyone of claims 6 to 8, **characterized in that** the dimensions of said blocking brackets (53) are arranged so as to allow their passing through said openings (6) which separate the cylinder portions (41) of the centering means (4).

10. Section of smoke duct (1) according to anyone of claims 6 to 9, **characterized in that** it comprises blocking brackets (53), some of them cooperating with the outer edge (51a) of the centering means (4), and others cooperating with the inner edge (51b) of the centering means (4).

11. Section of smoke duct (1) according to anyone of claims 6 to 10 depending on claim 5, **characterized in that** at least one of the blocking brackets (53) is elastic in the axial direction, said blocking bracket (53) comprising a blocking ergot (56) arranged for cooperating with an edge (42a, 42b) of the lateral fixing brackets (42), in order to position between the lateral brackets (42) of a cylinder portion (41) of the centering means (4) by means of the elasticity of the blocking bracket (53) during the rotating movement of said concentric tubes (2, 3) relative to each other.

12. Method of manufacturing a section of smoke duct (1) for assembling a smoke exhaust duct, said section of smoke duct (1) comprising - an outer tube (2) delimited by an outer surface (21) and an inner surface (22), and - an inner tube (3) delimited by an outer surface (31) and an inner surface (32),
said section of smoke duct (1) comprising centering means (4) for centering said inner tube (3) inside said outer tube (2) and making said inner tube (3) and outer tube (2) concentric relative to a central axis (1a),
then
- provide an outer tube (2), the inner surface (22) thereof comprising stopping structures (51),
- provide an inner tube (3), the outer surface (31) thereof comprising blocking structures (52),
**characterized by** the step of
pressing said stopping structures (51) against said blocking structures (52) by a rotating movement of the concentric tubes (2, 3) relative to each other around said central axis (1a) so as to obtain an axial locking of said tubes (2, 3) relative to each other in the two axial directions.
